(19) **Europäisches Patentamt**

**European Patent Office**

**Office européen des brevets**

(11) **EP 1 501 297 B1**

(12) **EUROPEAN PATENT SPECIFICATION**

(45) Date of publication and mention
of the grant of the patent:
**04.10.2006 Bulletin 2006/40**

(51) Int Cl.:
***H04N 7/01*** (2006.01)

(21) Application number: **04102868.9**

(22) Date of filing: **22.06.2004**

(54) **A method and apparatus for detecting a telecine portion of a television signal**

Verfahren und Vorrichtung zur Detektion eines aus einem Kinofilm stammenden Videosignals

Procédé et dispositif servant à détecter une partie de vidéo convertie en télécinéma

(84) Designated Contracting States:
**DE FR GB IT NL**

(30) Priority: **21.07.2003 KR 2003049907**

(43) Date of publication of application:
**26.01.2005 Bulletin 2005/04**

(73) Proprietor: **SAMSUNG ELECTRONICS CO., LTD.**
**Suwon-si**
**Gyeonggi-do 442-742 (KR)**

(72) Inventor: **Lee, Young-ho**
**Seoul (KR)**

(74) Representative: **Read, Matthew Charles et al**
**Venner Shipley LLP**
**20 Little Britain**
**London EC1A 7DH (GB)**

(56) References cited:
**WO-A-00/16561**       **WO-A-01/80559**
**US-A- 5 892 550**     **US-A- 5 982 444**
**US-B1- 6 469 745**    **US-B1- 6 509 933**

**Description**

The present invention relates to method for detecting a 2:2 pull-down sequence in a television signal as noted in the pre-characterising part of claim 1 appended hereto. The present invention also relates to a corresponding apparatus as noted in the pre-characterising part of claim 3 appended hereto.

Human eyes see a continuous image if 16 or more frames per second appear. In other words, for an image in motion, 16 frames per second correspond to a minimum sampling frequency (i.e., Nyquist frequency) for sampling a signal to ensure information preserved. In accordance with this, an image for a movie is processed at a speed of 24 frames per second, and an image for a television (TV) is processed at a speed of 25 or 30 frames per second.

Movies use a progressive system that instantaneously store every frame in a film and progressively project the frames onto a screen. In TV, since an image is basically transmitted over airwaves, each frame is filmed and transmitted by the process of scanning several hundreds of scanning lines, transmitting information relating to the content of each of these lines and then displaying these on a screen of a cathode ray (or Braun) tube. The display of these images is done by scanning. In the NTSC (National Television System Committee) colour TV system adopted in the United States, Japan, Korea, etc., 30 frames, each of which is composed of 525 scanning lines, per second are transmitted. In the PAL (Phase Alternation by Line) system or SECAM (Sequential Couleur a Memoire) system, 25 frames, each of which is composed of 625 scanning lines, per second are transmitted.

Also, the TV uses an interlaced scanning method which divides one picture (i.e., frame) into two fields and alternately scans the two fields in order to effectively present a moving image using limited scanning lines. The divided fields are called top and bottom fields, odd and even fields, upper and lower fields, etc. Accordingly, the NTSC system processes 60 fields of the frame per second, and the PAL or SECAM system processes 50 fields of frame per second.

When a movie is televised, every frame of the movie film is passed through a converter called a telecine (which is a compound word of a television and a cinema). For transmission of the movie through the PAL or SECAM TV system, 50 fields should be obtained from 25 pictures (i.e., frames). This means that two fields should be obtained with respect to one frame. This method of scanning two fields with respect to the respective frame is called a "2:2 pull-down" system.

The PAL or SECAM TV should perform the 2:2 pull-down procedure in a reverse manner in order to restore the respective transmitted fields to the progressive system. The most important thing in such a de-interlacing work is to accurately recognise the 2:2 pull-down sequence.

An aspect of the present invention is to provide an apparatus and method for detecting a 2:2 pull-down sequence, which can accurately recognize the 2:2 pull-down sequence for de-interlacing work.

US-A-5,982,444 describes the features of the pre-characterising part of claims 1 and 3 appended hereto.

A method according to the present invention is defined by claim 1 appended hereto.

An apparatus according to the present invention is defined by claim 3 appended hereto.

The present invention is advantageous because the detection of the telecine signal is not adversely affected by noise, nor by sharp changes in the picture content, for example at a scene change.

An embodiment of the present invention will now be described, by way of example only, with reference to Figures 1-10 in which:

Figure 1 is a view explaining a 2:2 pull-down process;
Figure 2 is a block diagram schematically illustrating an apparatus for detecting a 2:2 pull-down sequence according to the present invention;
Figure 3 is a block diagram schematically illustrating a first threshold value calculation unit in Figure 2;
Figure 4 is a block diagram schematically illustrating a second threshold value calculation unit in Figure 2;
Figure 5 is a view explaining a relation between a SAD pattern storage unit and an absolute change amount storage unit;
Figure 6 is a flowchart illustrating a method of detecting a 2:2 pull-down image according to the present invention;
Figure 7 is a flowchart illustrating a process of detecting a 2:2 pull-down image performed by a main detection unit in Figure 6;
Figure 8 is a flowchart illustrating a process of detecting a 2:2 pull-down image performed by a sub-detection unit in Figure 6;
Figure 9 is a view illustrating SADs and absolute change amounts described in Figure 6; and
Figure 10 is a view illustrating an example of the SAD pattern and the absolute change amount pattern.

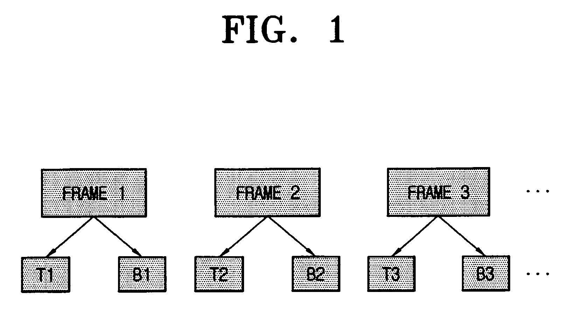

Referring to Figure 1, a 2:2 pull-down system scans two fields with respect to one frame. One frame of a movie includes a top field composed of odd lines and a bottom field composed of even lines. In the drawing, T1 denotes a top field of a frame 1, B1 a bottom field of the frame 1, T2 a top field of a frame 2, and B2 a bottom field of the frame 2.

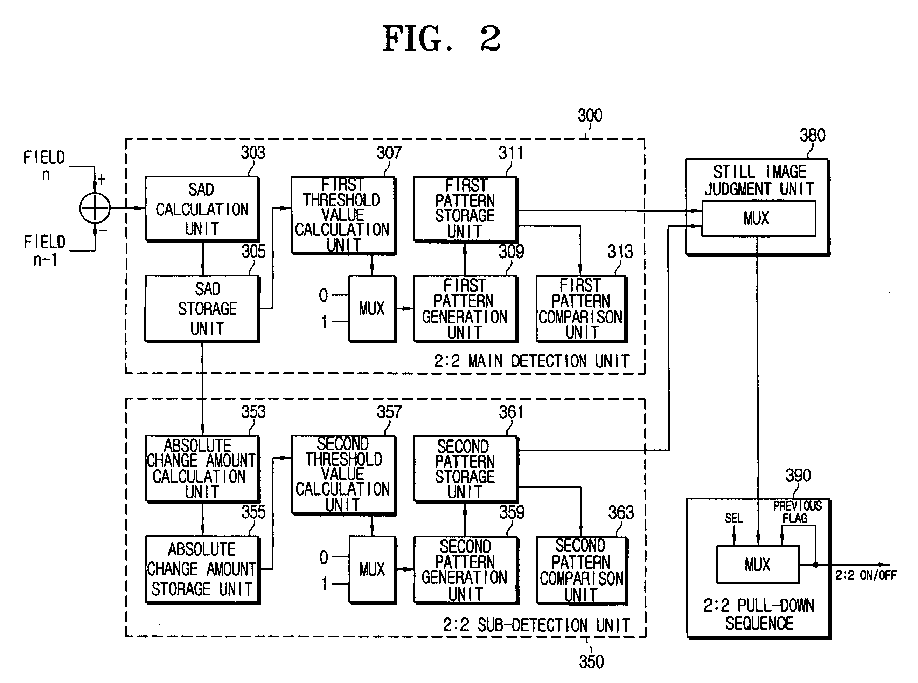

Referring to Figure 2, the apparatus for detecting a 2:2 pull-down sequence includes a main detection unit 300, a sub-detection unit 350, a still image judgment unit 380, and a 2:2 pull-down sequence decision unit 390.

The main detection unit 300 calculates a summed absolute difference (SAD) between sequential fields with respect to an input image signal, and detects a 2:2 pull-down image based on the calculated SADs. The sub-detection unit 350 calculates an absolute change amount (sometimes referred to as an absolute difference) between the calculated SADs, and detects the 2:2 pull-down image based on the calculated absolute difference. The absolute difference usually refers to the magnitude of the difference between the calculated SADs. The still image judgment unit 380 judges whether the input image signal is a still image based on the calculated SADs and the absolute difference. The 2:2 pull-down sequence decision unit 390 decides whether the input image signal is the 2:2 pull-down sequence by combining results of detecting the 2:2 pull-down image by the main detection unit 300 and by the sub-detection unit 350 and a result of judging whether the image signal is the still image by the still image judgment unit 380.

Also, the main detection unit 300 includes a SAD calculation unit 303, a SAD storage unit 305, a first threshold value calculation unit 307, a first pattern generation unit 309, a first pattern storage unit 311, and a first pattern comparison unit 313.

The SAD calculation unit 303 calculates the SAD between the sequential fields of the image signal. The SAD storage unit 305 sequentially stores the SADs calculated by the SAD calculation unit 303. In order to sequentially store the calculated SADs, the SAD storage unit 305 is implemented by a predetermined number of FIFO (First-In First-Out) buffers. The first threshold value calculation unit 307 calculates a first threshold value using the stored SADs. The first pattern generation unit 309 generates patterns of the SADs according to the calculated first threshold value. The first pattern storage unit 311 sequentially stores the patterns of the SADs generated by the first pattern generation unit 309. In order to sequentially store the SAD patterns generated by the first pattern generation unit 309, the first pattern storage unit 311 is implemented by a predetermined number of FIFO buffers. The first pattern comparison unit 313 compares the pattern of the SAD stored in the first pattern storage unit 311 with a predetermined basic pattern of the SAD.

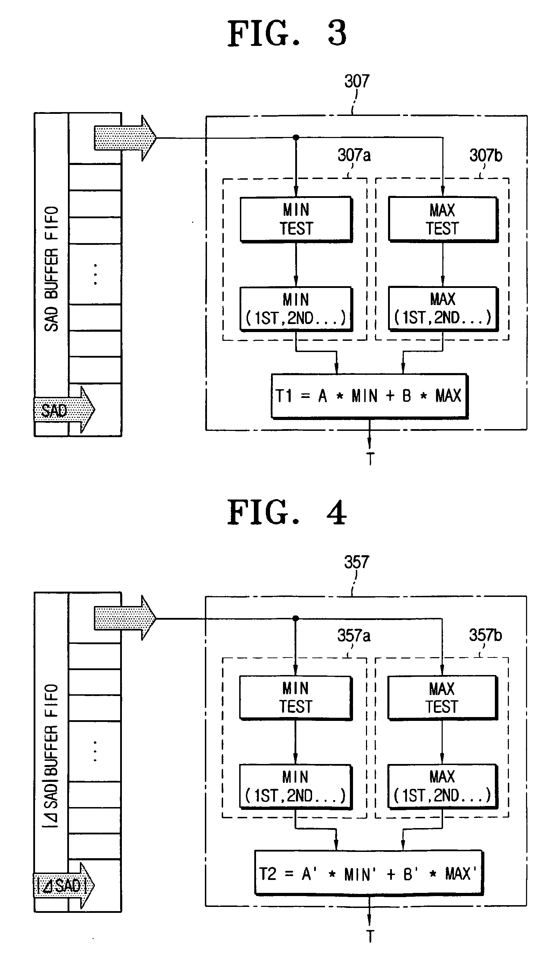

Also, the first threshold value calculation unit 307 includes a first minimum value detection unit 307a and a first maximum value detection unit 307b as shown in Figure 3. The first minimum value detection unit 307a detects a minimum value of the SADs with respect to a specified section of the SADs stored in the SAD storage unit 305. The first maximum value detection unit 307b detects a maximum value of the SADs with respect to the specified section. In this case, since the 2:2 pull-down sequence has the minimum value of the SADs between two fields of the same frame and has the maximum value of the SADs between sequential fields of two adjacent frames, the first minimum value detection unit 307a and the first maximum value detection unit 307b can be implemented to detect the minimum value and the maximum value with respect to the SADs between the spaced fields. It is preferable to implement the first minimum value detection unit 307a and the first maximum value detection unit 307b so that the first minimum value detection unit 307a detects the SAD between the fields of the same frame, and the first maximum value detection unit 307b detects the SAD between the fields of the adjacent frames.

Also, the sub-detection unit 350 includes an absolute difference calculation unit 353, an absolute difference storage unit 355, a second threshold value calculation unit 357, a second pattern generation unit 359, a second pattern storage unit 361, and a second pattern comparison unit 363. The absolute difference calculation unit 353 calculates an absolute difference between the SADs calculated by the SAD calculation unit 303. The absolute difference storage unit 355 sequentially stores the calculated absolute differences. The second threshold value calculation unit 357 calculates a second threshold value using the stored absolute differences. The second pattern generation unit 359 generates a pattern of the absolute differences according to the calculated second threshold value. The second pattern storage unit 361 sequentially stores the patterns of the absolute differences generated by the second pattern generation unit 359. In this case, it is preferable that the absolute difference storage unit 355 and the second pattern storage unit 361 are implemented by FIFO buffers in the same manner as the SAD storage unit 305 and the first pattern storage unit 311.

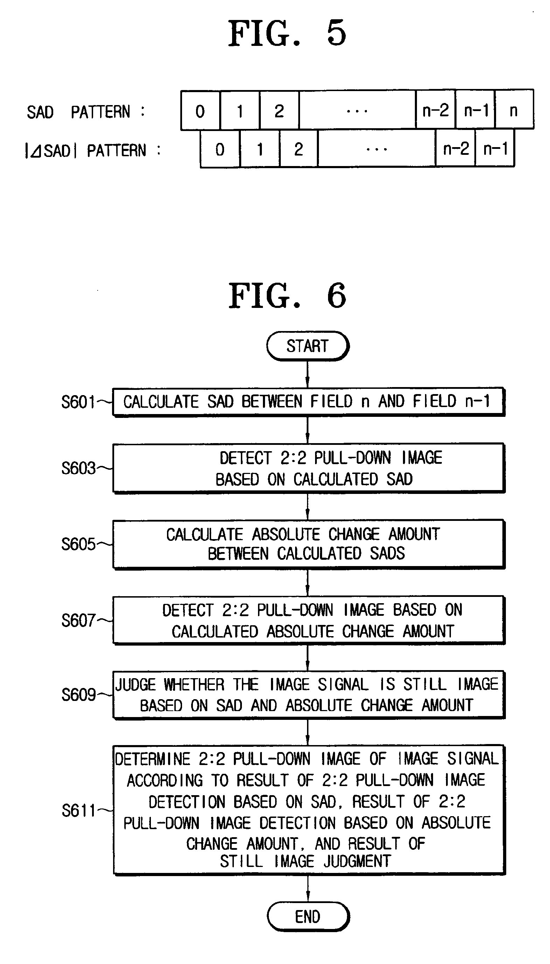

The second pattern comparison unit 363 compares the pattern of the absolute difference stored in the second pattern storage unit 361 with a predetermined basic pattern of the absolute difference. Also, the second threshold value calculation unit 357 includes a second minimum value detection unit 357a and a second maximum value detection unit 357b as shown in Figure 4. The second minimum value detection unit 357a detects a minimum value of the absolute differences with respect to a specified section of the absolute differences stored in the absolute difference storage unit 355. The second maximum value detection unit 357b detects a maximum value of the absolute differences with respect to the specified section. Here, it is preferable that the second pattern storage unit 361 is implemented so that the absolute differences between the SADs stored in the first pattern storage unit 311 are sequentially stored in the second pattern storage unit 361. The relation between the first pattern storage unit 311 and the second pattern storage unit 361 is illustrated in Figure 5.

Referring to Figure 6, the SAD calculation unit 303 of the main detection unit 300 calculates the SAD between sequential fields of an input image signal (step S601). In other words, if it is defined that the previously inputted field is called a previous field n-1, and a field sequentially following the previous field n-1 is called a present field n with respect to the input image signal, the SAD calculation unit 303 calculates the SAD between the sequential fields by calculating the difference of pixel values between the present field n and the previous field n-1.

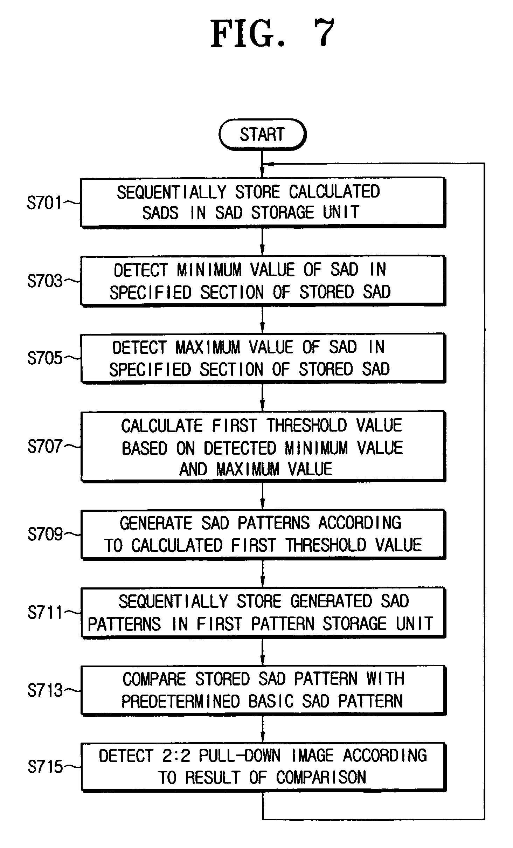

The main detection unit 300 detects whether the input image signal is a 2:2 pull-down image based on the calculated SADs (step S603). The process of detecting a 2:2 pull-down sequence performed by the main detection unit 300 is illustrated in Figure 7.

Referring to Figure 7, the SAD storage unit 305 sequentially stores the SADs calculated by the SAD calculation unit 303 (step S701). The first minimum value detection unit 307a of the first threshold value calculation unit 307 detects the minimum value of the SADs with respect to a specified section of the SADs stored in the SAD storage unit 305 (step S703). The first maximum value detection unit 307b of the first threshold value calculation unit 307 detects the maximum value of the SADs with respect to the specified section of the SADs stored in the SAD storage unit 305 (step S705). In this case, since, generally, the SAD between the fields of the same frame has a small value, the first minimum value detection unit 307a may be implemented so as to detect the minimum value by searching for only the SAD between the fields of the same frame once every two periods. Also, since, generally, the SAD between the fields of adjacent frames is changed, the first maximum value detection unit 307b may be implemented so as to detect the maximum value by searching for only the SAD between the fields of adjacent frames once every two periods.

The first threshold value calculation unit 307 calculates the first threshold value based on the minimum value and the maximum value of the SADs detected by the first minimum value detection unit 307a and the first maximum value detection unit 307b, and the calculation of the first threshold value is performed in accordance with the following equation.

[Equation 1]

$$T1 = a \times MIN + b \times MAX$$

Here, T1 denotes the first threshold value, a and b are certain values where a + b = 1, MIN denotes the minimum value of the SADs in a specified section, and MAX denotes the maximum value of the SADs in the specified section.

The first pattern generation unit 309 generates patterns of the SADs stored in the SAD storage unit 305 according to the first threshold value calculated by the first threshold value calculation unit 307 (step S709). In this case, the first pattern generation unit 309 compares the SAD with the first threshold value calculated by the first threshold value calculation unit 307, and generates '1' if the SAD is larger than the first threshold value. Otherwise, the first pattern generation unit 309 generates '0'.

The first pattern storage unit 311 sequentially stores the patterns of the SADs generated by the first pattern generation unit 309 (step S711). The first pattern comparison unit 313 compares the pattern of the SAD stored in the first pattern storage unit 311 with the predetermined basic pattern of the SAD (step S713). Here, the basic pattern of the SAD means the basic pattern of the SAD of the 2:2 pull-down image, and may appear as two types. The two types of the basic pattern of the SAD are 0101010101 and 1010101010. The main detection unit 300 detects the 2:2 pull-down image in accordance with a result of a comparison by the first pattern comparison unit 313 (step S715). This process of detecting the 2:2 pull-down image is repeatedly performed with respect to the input image signal. In the case that the picture is abruptly changed (for example at a scene change), the 2:2 pull-down image is detected by adaptively changing the threshold value, and thus it can properly cope with the changed picture.

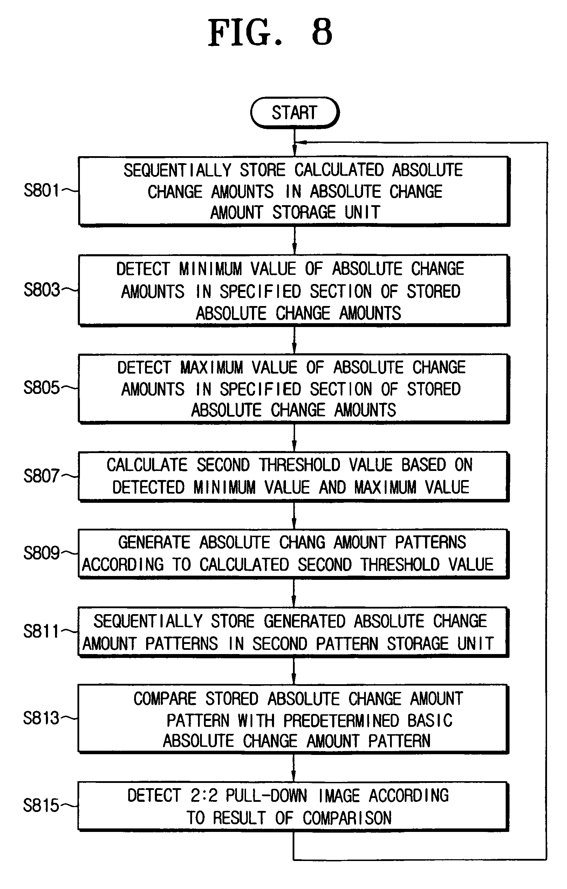

Also, the absolute difference calculation unit 353 of the sub-detection unit 350 calculates the absolute difference between the SADs calculated by the SAD calculation unit 303 (step S605). In other words, if it is defined that the difference of pixel values between the previous field n-1 and the present field n is SAD1, and the difference of pixel values between the present field and the next field n+1 is SAD2, the absolute difference calculation unit 353 calculates the difference of absolute values between SAD1 and SAD2, i.e., the absolute difference. The sub-detection unit 350 detects whether the input image signal is a 2:2 pull-down image based on the absolute differences calculated by the absolute difference calculation unit 353 (step S607). The process of detecting a 2:2 pull-down sequence performed by the sub-detection unit 350 is illustrated in Figure 8.

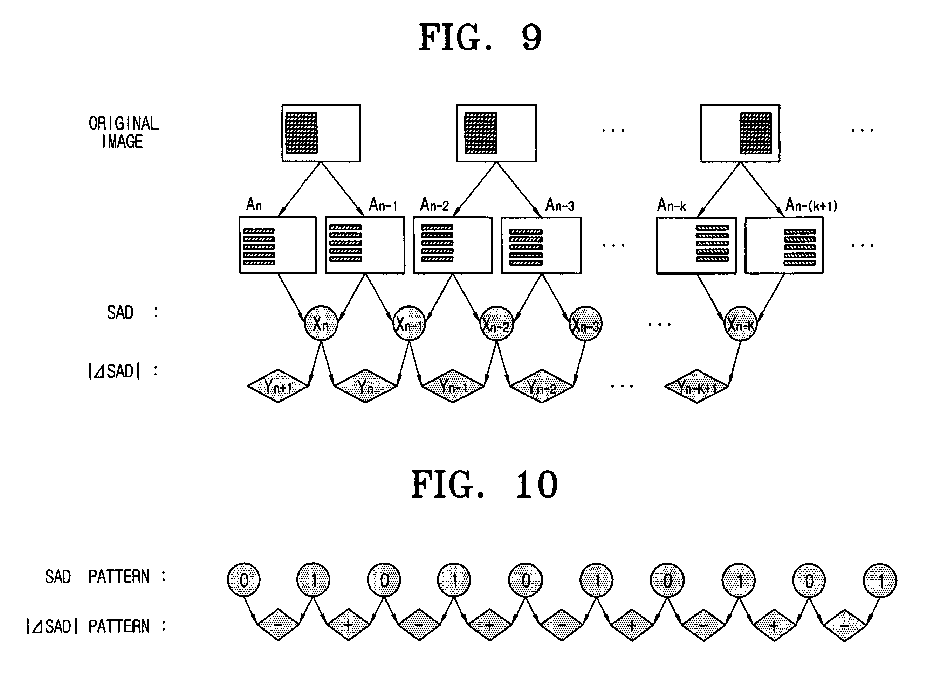

Referring to Figure 8, the absolute difference storage unit 355 sequentially stores the absolute differences calculated by the absolute difference calculation unit 353 (step S801). The SAD and absolute difference in this case are illustrated in Figure 9. The second minimum value detection unit 357a of the second threshold value calculation unit 357 detects the minimum value of the absolute differences with respect to a specified section of the absolute differences stored in the absolute difference storage unit 355 (step S803). The second maximum value detection unit 357b of the second threshold value calculation unit 357 detects the maximum value of the absolute differences with respect to the specified section of the absolute differences stored in the absolute difference storage unit 355 (step S805).

The second threshold value calculation unit 357 calculates the second threshold value based on the minimum value and the maximum value of the absolute differences detected by the second minimum value detection unit 357a and the second maximum value detection unit 357b. The calculation of the second threshold value is performed by the following equation.

[Equation 2]

$$T2 = a' \times MIN' + b' \times MAX'$$

Here, T2 denotes the second threshold value, a' and b' are certain values where a' + b' = 1, MIN' denotes the minimum value of the absolute differences in a specified section, and MAX' denotes the maximum value of the absolute differences in the specified section.

The second pattern generation unit 359 generates patterns of the absolute differences stored in the absolute difference storage unit 355 according to the second threshold value calculated by the second threshold value calculation unit 357 (step S809). In this case, the second pattern generation unit 359 compares the absolute difference with the second threshold value calculated by the second threshold value calculation unit 357, and generates '1' if the absolute difference is larger than the second threshold value. Otherwise, the second pattern generation unit 359 generates '0'. In the drawing, '+' is marked instead of '1', and '-' is instead of '0'.

The second pattern storage unit 361 sequentially stores the patterns of the absolute differences generated by the second pattern generation unit 359 (step S811). The second pattern comparison unit 363 compares the pattern of the absolute difference stored in the second pattern storage unit 361 with the predetermined basic pattern of the absolute difference (step S813). Here, the basic pattern of the absolute difference means the basic pattern of the absolute difference of the 2:2 pull-down image, and appears as two types. In other words, the two types of the basic pattern of the absolute difference are -+-+-+-+ and +-+-+-+-. The basic pattern of the absolute difference is illustrated in Figure 10.

The sub-detection unit 350 detects the 2:2 pull-down image according to a result of comparison by the second pattern comparison unit 363 (step S815).

The still image judgment unit 380 judges whether the input image signal is a still image based on the SAD and the absolute difference (step S609). For example, if the presently calculated SAD and the SAD calculated one field before are very small in comparison to the previous SAD, and the absolute difference between the presently calculated SAD and the SAD calculated one field before is very small in comparison to the previous absolute difference, the present input image is close to a still image. In this case, the pattern of the SAD and the pattern of the absolute difference stored in the first pattern storage unit 311 and the second pattern storage unit 361 is as follows.

$$SAD\_pattern[n] = 0$$

$$SAD\_pattern[n+1] = 0$$

$$|\Delta SAD|\_pattern[n-1] = 0$$

The 2:2 pull-down sequence decision unit 390 decides whether the input image signal is the 2:2 pull-down sequence by combining results of detecting the 2:2 pull-down image by the main detection unit 300 and by the sub-detection unit 350 and a result of judging whether the image signal is the still image by the still image judgment unit 380. At this time, if it is judged that the input image signal is the still image by the still image judgment unit 380, the present patterns of the SAD and the absolute difference deviate from the 2:2 pull-down image, but the previous 2:2 pull-down image flag is maintained as it is. Several examples of deciding the 2:2 pull-down sequence by the 2:2 pull-down sequence decision unit 390 are shown in Table 1 below.

[Table 1]

| Decisio n | Previous Flag | Still Flag | Main | Sub | Count |
|-----------|---------------|-----------|------|-----|----------------|
| 0 | 0 | X | 1 | 1 | count < $\varepsilon$ |
| 1 | 0 | X | 1 | 1 | count = $\varepsilon$ |
| 1 | 1 | 0 | 1 | 1 | X |
| 0 | 1 | 0 | 0 | X | X |
| 1 | 1 | 0 | 1 | 0 | X |
| 1 | 1 | 1 | X | X | X |

The 2:2 pull-down sequence decision unit 390 outputs the 2:2 pull-down image according to the results of detection by the main detection unit 300 and the sub-detection unit 350 and the previous flag. For example, if the previous flag is "0", and the counted value of the input image signal is smaller than a predetermined value, i.e., if the 2:2 pull-down image detected by the main detection unit 300 and the sub-detection unit 350 does not continue for a predetermined time, the 2:2 pull-down sequence decision unit 390 maintains the previous flag irrespective of the still flag, and outputs "0". If the main detection unit 300 and the sub-detection unit 350 detect the 2:2 pull-down image in a state where the previous flag is "0" and the counted value of the input image signal reaches the predetermined value, the 2:2 pull-down sequence decision unit 390 reverses the previous flag irrespective of the still flag, and outputs "1". Here, the fact that the previous flag is "0" means that the 2:2 pull-down image is not decided with respect to the previous image signal.

If the previous flag is "1", i.e., if the 2:2 pull-down image is decided with respect to the previous image signal, the 2:2 pull-down sequence decision unit 390 decides the 2:2 pull-down sequence irrespective of the counted value. In other words, if the 2:2 pull-down image is detected by the main detection unit 300 and the sub-detection unit 350, and the input image is not decided to be the still image by the still image judgment unit 380 in the case that the previous flag is "1", the 2:2 pull-down sequence decision unit 390 decides that the input image is the 2:2 pull-down sequence. Also, if the still flag is "0", i.e., if the input image is judged not to be the still image by the still image judgment unit 380, in the case that the 2:2 pull-down image is detected by the main detection unit 300, but the 2:2 pull-down image is not detected by the sub-detection unit 350, the 2:2 pull-down sequence decision unit 390 decides that the input image is the 2:2 pull-down sequence.

However, if the still flag is "1" in the case that the previous flag is "1", the 2:2 pull-down sequence decision unit 390 maintains the previous flag irrespective of the detection of the 2:2 pull-down sequence by the main detection unit 300 and the sub-detection unit 350, and decides that the input image signal is the 2:2 pull-down sequence. This prevents the displayed image looking unnatural due to the frequent on/off operation of the 2:2 pull-down image flag. If the still image that is not the 2:2 pull-down image is input after the 2:2 pull-down image signal is input, there will not be a detrimental effect on the displayed image even though the 2:2 pull-down image process is performed with respect to the still image.

Consequently, the apparatus for detecting a 2:2 pull-down sequence according to the present invention can accurately detect the 2:2 pull-down image using the SAD and the absolute difference. Also, the apparatus can prevent the displayed image from looking unnatural by reducing the frequency of on/off operations of the 2:2 pull-down image flag.

As described above, according to the apparatus for detecting a 2:2 pull-down sequence according to the present invention, the 2:2 pull-down image can accurately be detected by the main detection unit and the sub-detection unit and by adaptively coping with a change in picture even in the case of much noise. Also, unnatural display of the image due to the frequent on/off operations of the 2:2 pull-down image flag can be prevented.

**Claims**

1. A method of detecting a 2:2 pull-down sequence in a television signal, comprising:

generating a difference signal indicative of the difference between an odd field and the even field of successive frames; **characterised by**:

generating an absolute difference signal indicative of the magnitude of the difference between consecutive difference signals; and
generating a telecine portion indication signal, indicative of a 2:2 pull-down sequence, in dependence upon the absolute difference signal.

2. A method according to claim 1, comprising:

   storing the absolute difference signal;
   calculating a threshold value in accordance with the stored absolute difference signal; and
   generating the telecine portion indication signal in dependence upon the threshold value.

3. An apparatus for detecting a 2:2 pull-down sequence in a television signal, comprising:

   means (303) for generating a difference signal indicative of the difference between the odd field and the even field of successive frames; **characterised by:**

   means (353) for generating an absolute difference signal indicative of the magnitude of the difference between consecutive difference signals; and
   a 2:2 pull-down sequence decision unit (390) configured to generate a telecine portion indication signal, indicative of a 2:2 pull-down sequence in the television signal, in dependence upon the absolute difference signal.

4. An apparatus according to claim 3, comprising:

   means (355) for storing the absolute difference signal;
   means (357) for calculating a threshold value in accordance with the stored absolute difference signal; and
   means (390) for generating the telecine portion indication signal in dependence upon the threshold value.

5. A television, comprising:

   a screen for displaying an image; and
   an apparatus according to either one of claim 3 or 4.

6. An apparatus according to either one of claims 3 or 4, comprising:

   a still image judgment unit (380) configured to judge whether the television signal is a still image based on the calculated difference signal and the absolute difference signals; and wherein
   the 2:2 pull-down sequence decision unit (390) is configured to decide whether the television signal is a 2:2 pull-down sequence by combining the output of the means (303) for generating a difference signal, means (353) for generating an absolute difference signal and the still judgment unit (380).

7. The apparatus as claimed in claim 6, wherein the means (303) for generating the difference signal comprises:

   a SAD calculation unit (303) configured to calculate the difference signals between the sequential fields of the television signal;
   a SAD storage unit (305) configured to sequentially store the calculated difference signals;
   a first threshold value calculation unit (307) configured to calculate a first threshold value using the stored difference signals;
   a first pattern generation unit (309) configured to generate patterns of the difference signals according to the calculated first threshold value;
   a first pattern storage unit (311) configured to sequentially store the patterns of the difference signals generated by the first pattern generation unit (309); and
   a first pattern comparison unit (313) configured to compare the patterns of the difference signals stored in the first pattern storage unit (311) with a predetermined basic pattern of the difference signals;

   wherein the means (303) for generating the difference signal detects the 2:2 pull-down image according to a result of comparison by the first pattern comparison unit (313).

8. The apparatus as claimed in claim 7, wherein the first threshold value calculation unit (307) comprises:

   a first minimum value detection unit (307a) configured to detect a minimum value of the difference signals with respect to a specified section of the difference stored in the SAD storage unit (305); and
a first maximum value detection unit (307b) configured to detect a maximum value of the difference signals with respect to the specified section;

wherein the first threshold value calculation unit (307) calculates the first threshold value based on the detected minimum and maximum values.

**9.** The apparatus as claimed in claim 8, wherein the first threshold value calculation unit (307) calculates the first threshold value by the following equation

$$T1 = a \times MIN + b \times MAX$$

wherein T1 denotes the first threshold value, a and b are certain values keeping a + b = 1, MIN denotes a minimum value of 5 continuous difference signals, and MAX denotes a maximum value of the difference signals in the specified section.

**10.** The apparatus as claimed in claim 9, wherein the means (353) for generating an absolute difference signal comprises:

an absolute difference signal calculation unit (353) configured to calculate the absolute differences between the calculated difference signals;
an absolute change amount storage unit (355) configured to sequentially store the absolute difference signals;
a second threshold value calculation unit (357) configured to calculate a second threshold value using the stored absolute difference signals;
a second pattern generation unit (359) configured to generate patterns of the absolute difference signals according to the calculated second threshold value;
a second pattern storage unit (361) configured to sequentially store the patterns of the absolute difference signals generated by the second pattern generation unit (359); and
a second pattern comparison unit (363) configured to compare the pattern of the absolute difference signals stored in the second pattern storage unit (361) with a predetermined basic pattern of the absolute difference signals;

wherein the means (353) for generating the absolute difference signal detects the 2:2 pull-down image according to a result of comparison by the second pattern comparison unit (363).

**11.** The apparatus as claimed in claim 10, wherein the second threshold value calculation unit (357) comprises:

a second minimum value detection unit (357a) configured to detect a minimum value of the absolute difference signals with respect to a specified section of the absolute difference signals stored in the absolute change amount storage unit (355); and
a second maximum value detection unit (357b) configured to detect a maximum value of the absolute difference signals with respect to the specified section;

wherein the second threshold value calculation unit (357) calculates the second threshold value based on the detected minimum and maximum values.

**12.** The apparatus as claimed in claim 11, wherein the second threshold value calculation unit (357) calculates the second threshold value using the following equation

$$T2 = a' \times MIN' + b' \times MAX'$$

wherein T2 denotes the second threshold value, a' and b' are certain values keeping a' + b' = 1, MIN' denotes a minimum value of 5 continuous absolute difference signals, and MAX' denotes a maximum value of the absolute difference signals of the specified section.

**13.** The apparatus as claimed in claim 12, wherein the still image judgment unit (380) judges whether the image signal is the still image according to the patterns of the difference signals stored in the first pattern storage unit (311) and the patterns of the absolute difference signals stored in the second pattern storage unit (381).

**14.** A method according to claim 1, comprising:

detecting the 2:2 pull-down image based on the generated difference signal;
detecting the 2:2 pull-down image based on the absolute difference signal;
judging whether the television signal is a still image based on the generated difference signal and the absolute difference signal; and
deciding whether the television signal is the 2:2 pull-down sequence by combining results of detecting the 2:2 pull-down image by the means (303) for generating a difference signal and by the means for generating an absolute difference signal and a result of judging whether the television signal is the still image.

**15.** The method as claimed in claim 14, wherein generating a difference signal comprises:

sequentially storing the difference signals in a SAD storage unit (305);
calculating a first threshold value using the sequentially stored difference signals;
generating patterns of the difference signals according to the calculated first threshold value;
sequentially storing the generated patterns of the difference signals in a first pattern storage unit (311); and
comparing the stored patterns of the difference signals with a predetermined basic pattern of the difference signals;

wherein the 2:2 pull-down image is detected according to a result of the difference signal pattern comparison.

**16.** The method as claimed in claim 15, wherein the calculating the first threshold value operation comprises:

detecting a minimum value of the difference signal with respect to a specified section of the difference signals stored in the SAD storage unit (305); and
detecting a maximum value of the difference signals with respect to the specified section;

wherein the first threshold value is calculated based on the detected minimum and maximum values.

**17.** The method as claimed in claim 16, wherein the calculating the first threshold value operation calculates the first threshold value by the following equation

$$T1 = a \times MIN + b \times MAX$$

wherein T1 denotes the first threshold value, a and b are certain values keeping a + b = 1, MIN denotes a minimum value of 5 continuous difference signals, and MAX denotes a maximum value of the difference signals in the specified section.

**18.** The method as claimed in claim 17, wherein the calculating an absolute difference signal operation comprises:

sequentially storing the absolute difference signals in an absolute change amount storage unit (355);
calculating a second threshold value using the stored absolute difference signals;
generating patterns of the absolute difference signals according to the calculated second threshold value;
sequentially storing the patterns of the absolute difference signals generated by a second pattern generation unit (359); and
comparing the patterns of the absolute difference signals stored in a second pattern storage unit (361) with a predetermined basic pattern of the absolute difference signals;

wherein the 2:2 pull-down image is detected according to a result of the patterns of the absolute difference signal comparison.

**19.** The method as claimed in claim 18, wherein the calculating a second threshold value operation comprises:

detecting a minimum value of the absolute difference signals with respect to a specified section of the absolute difference signals stored in the absolute change amount storage unit (355); and

detecting a maximum value of the absolute difference signals with respect to the specified section;

wherein the second threshold value is calculated based on the detected minimum and maximum values.

20. The method as claimed in claim 19, wherein the second threshold value calculation step calculates the second threshold value by the following equation

$$T2 = a' \times MIN' + b' \times MAX'$$

wherein T2 denotes the second threshold value, a' and b' are certain values keeping a' + b' = 1, MIN' denotes a minimum value of 5 continuous absolute difference signals, and MAX' denotes a maximum value of the absolute difference signals of the specified section.

21. The method as claimed in claim 20, wherein the still image judging operation judges whether the television signal is the still image according to the patterns of the difference signals stored in the first pattern storage unit (311) and the patterns of the absolute difference signals stored in the second pattern storage unit (361).


**Patentansprüche**

1. Ein Verfahren zum Detektieren einer 2:2-Pull-Down Sequenz in einem Fernsehsignal, umfassend:

Erzeugen eines Differenzsignals, das die Differenz zwischen einem ungeraden Feld und dem geraden Feld von aufeinander folgenden Vollbildern anzeigt; **gekennzeichnet durch**:

Erzeugen eines Absolut-Differenzsignals, das die Größe der Differenz zwischen aufeinander folgenden Differenzsignalen anzeigt; und
Erzeugen eines Telecine-Teil-Anzeigesignals, das eine 2:2-Pull-Down-Sequenz in Abhängigkeit von dem Absolut-Differenzsignal anzeigt.

2. Ein Verfahren nach Anspruch 1, umfassend:

Speichern des Absolut-Differenzsignals;
Berechnen eines Grenzwertes in Übereinstimmung mit dem Absolut-Differenzsignal; und
Erzeugen des Telecine-Teil-Anzeigesignals in Abhängigkeit von dem Grenzwert.

3. Eine Vorrichtung zum Detektieren einer 2:2-Pull-Down-Sequenz in einem Fernsehsignal, umfassend:

Mittel (303) zum Erzeugen eines Differenzsignals, das die Differenz zwischen dem ungeraden Feld und dem geraden Feld von aufeinander folgenden Vollbildern anzeigt; **gekennzeichnet durch**:

Mittel (353) zum Erzeugen eines Absolut-Differenzsignals, das die Größe der Differenz zwischen aufeinander folgenden Differenzsignalen anzeigt; und
eine 2:2-Pull-Down-Sequenz-Entscheidungseinheit (390), die konfiguriert ist zum Erzeugen eines Telecine-Teil-Tanzeigesignals im Fernsehsignal, das eine 2:2-Pull-Down-Sequenz in Abhängigkeit von dem Absolut-Differenzsignal anzeigt.

4. Eine Vorrichtung nach Anspruch 3, umfassend:

Mittel (355) zum Speichern des Absolut-Differenzsignals;
Mittel (357) zum Berechnen eines Grenzwertes in Übereinstimmung mit dem Absolut-Differenzsignal; und
Mittel (390) zum Erzeugen des Telecine-Teil-Anzeigesignals in Abhängigkeit von dem Grenzwert.

5. Ein Fernsehapparat, umfassend:

ein Bildschirm zum Anzeigen eines Bildes; und
eine Vorrichtung nach einem der Ansprüche 3 oder 4.

6. Eine Vorrichtung nach einem der Ansprüche 3 oder 4, umfassend:

eine Standbild-Bewertungs-Einheit (380), die konfiguriert, um basierend auf dem berechneten Differenzsignal und dem Absolut-Differenzsignal zu bewerten, ob das Fernsehsignal ein Standbild ist; und wobei
die 2:2-Pull-Down-Sequenz-Bewertungseinheit (390) konfiguriert ist zum Entscheiden, ob das Fernsehsignal eine 2:2-Pull-Down-Sequenz ist durch Kombinieren der Ausgabe der Mittel (303) zum Erzeugen eines Differenzsignals, der Mittel (353) zum Erzeugen eines Absolut-Differenzsignals und der Standbewertungseinheit (380).

7. Die Vorrichtung wie in Anspruch 6 beansprucht, wobei die Mittel (303) zum Erzeugen des Differenzsignals umfassen:

eine SAD-Berechnungseinheit (303), die zum Berechnen des Differenzsignals zwischen den sequentiellen Feldern auf dem Fernsehsignal konfiguriert ist;
eine SAD-Speichereinheit (305), die zum sequentiellen Speichern der berechneten Differenzsignale konfiguriert ist;
eine erste Grenzwert-Berechnungseinheit (307), die zum Berechnen eines ersten Grenzwertes unter Verwendung der gespeicherten Differenzsignale konfiguriert ist;
eine erste Muster-Erzeugungseinheit (309), die zum Erzeugen von Mustern der Differenzsignale gemäß dem berechneten ersten Grenzwert konfiguriert ist;
eine erste Muster-Speichereinheit (311), die zum sequentiellen Speichern der durch die erste Muster-Erzeugungseinheit (309) erzeugten Muster der Differenzsignale konfiguriert ist; und
eine erste Muster-Vergleichseinheit (313), die zum Vergleichen der in der ersten Muster-Speichereinheit (311) gespeicherten Muster der Differenzsignale mit einem vorbestimmten Grundmuster der Differenzsignale konfiguriert ist;

wobei die Mittel (303) zum Erzeugen des Differenzsignals das 2:2-Pull-Down-Bild gemäß einem Vergleichergebnisses durch die erste Muster-Vergleichseinheit (313) detektiert.

8. Die Vorrichtung wie in Anspruch 7 beansprucht, wobei die erste Grenzwert-Berechnungseinheit (307) umfasst:

eine erste Minimalwert-Detektierungseinheit (307a), die zum Detektieren eines Minimalwertes der Differenzsignale mit Bezug auf einen bestimmten Abschnitt der in der SAD-Speichereinheit (305) gespeicherten Differenz konfiguriert ist; und
eine erste Maximalwert-Detektierungseinheit (307b), die zum Detektieren eines Maximalwertes der Differenzsignale mit Bezug auf einen bestimmten Abschnitt konfiguriert ist;

wobei die erste Grenzwert-Berechnungseinheit (307) den ersten Grenzwert basierend auf den detektierten Minimal- und Maximalwerten detektiert.

9. Die Vorrichtung wie in Anspruch 8 beansprucht, wobei die erste Grenzwert-Berechnungseinheit (307) den ersten Grenzwert durch folgende Gleichung berechnet

$$T1 = a \times MIN + b \times MAX$$

wobei T1 den ersten Grenzwert bezeichnet, a und b bestimmte Werte sind, die a + b = 1 beibehalten, MIN einen Minimalwert von 5 kontinuierlichen Differenzsignalen bezeichnet und MAX einen Maximalwert der Differenzsignale in dem bestimmten Abschnitt bezeichnet.

10. Die Vorrichtung wie in Anspruch 9 beansprucht, wobei die Mittel (353) zum Erzeugen eines Absolut-Differenzsignals umfassen:

eine absolute Differenzsignal-Berechnungseinheit (353), die zum Berechnen der Absolut-Differenzen zwischen den berechneten Differenzsignalen konfiguriert ist;

eine absolute Änderungsbetrag-Speichereinheit (355), die zum sequentiellen Speichern der Absolut-Differenzsignale konfiguriert ist;

eine zweite Grenzwert-Berechnungseinheit (357), die zum Berechnen eines zweiten Grenzwertes unter Verwendung der gespeicherten Absolut-Differenzsignale konfiguriert ist;

eine zweite Muster-Erzeugungseinheit (359), die zum Erzeugen von Mustern der Absolut-Differenzsignale gemäß dem berechneten zweiten Grenzwert konfiguriert ist;

eine zweite Muster-Speichereinheit (361), die zum sequentiellen Speichern der durch die zweite Muster-Erzeugungseinheit (359) erzeugten Muster der Absolut-Differenzsignale konfiguriert ist; und

eine zweite Muster-Vergleichseinheit (363), die zum Vergleichen der Muster der in der zweiten Muster-Speichereinheit (361) gespeicherten Absolut-Differenz-Signale mit einem vorbestimmten Grundmuster der Absolut-Differenzsignale konfiguriert ist;

wobei die Mittel (353) zum Erzeugen des Absolut-Differenzsignals das 2:2-Pull-Down-Bild gemäß einem Vergleichsergebnis durch die zweite Muster-Vergleichseinheit (363) detektiert.

**11.** Die Vorrichtung wie in Anspruch 10 beansprucht, wobei die zweite Grenzwert-Berechnungseinheit (357) umfasst:

eine zweite Minimalwert-Detektierungseinheit (357a), die zum Detektieren eines Minimalwertes der Absolut-Differenzsignale mit Bezug auf einen bestimmten Abschnitt der in der Absolut-Änderungsbetrag-Speichereinheit (355) gespeicherten Absolut-Differenzsignale konfiguriert ist; und

eine zweite Maximalwert-Detektierungseinheit (357b), die zum Detektieren eines Maximalwertes der Absolut-Differenzsignale mit Bezug auf den bestimmten Abschnitt konfiguriert ist;

wobei die zweite Grenzwert-Berechnungseinheit (357) den zweiten Grenzwert basierend auf den detektieren Minimal- und Maximalwerten berechnet.

**12.** Die Vorrichtung wie in Anspruch 11 beansprucht, wobei die zweite Grenzwert-Berechnungseinheit (357) den zweiten Grenzwert unter Verwendung der folgenden Gleichung berechnet

$$T2 = a' \times MIN' + b' \times MAX'$$

wobei T2 den zweiten Grenzwert bezeichnet, a' und b' bestimmte Werte sind, die a' + b' = 1 beibehalten, MIN' einen Minimalwert von 5 kontinuierlichen Absolut-Differenzsignalen bezeichnet und MAX' einen Maximalwert der Absolut-Differenzsignale des bestimmten Abschnittes bezeichnet.

**13.** Die Vorrichtung wie in Anspruch 12 beansprucht,
wobei die Standbild-Bewertungseinheit (380) bewertet, ob das Bildsignal das Standbild gemäß den Mustern der in der ersten Muster-Speichereinheit (311) gespeicherten Differenzsignale und den Mustern der in der zweiten Muster-Speichereinheit (381) gespeicherten Absolut-Differenzsignale ist.

**14.** Ein Verfahren gemäß Anspruch 1, umfassend:

Detektieren des 2:2-Pull-Down-Bildes basierend auf dem erzeugten Differenzsignal;

Detektieren des 2;2-Pull-Down-Bildes basierend auf dem Absolut-Differenzsignal;

Bewerten, ob das Fernsehsignal ein Standbild ist basierend auf dem erzeugten Differenzsignal und dem Absolut-Differenzsignal; und

Entscheiden, ob das Fernsehsignal die 2:2-Pull-Down-Sequenz ist durch Kombinieren von Ergebnissen des Detektierens des 2:2-Pull-Down-Bildes durch die Mittel (303) zum Erzeugen eines Differenzsignals und durch die Mittel zum Erzeugen eines Absolut-Differenzsignals und einem Bewertungsergebnis, ob das Fernsehsignal das Standbild ist.

**15.** Das Verfahren wie in Anspruch 14 beansprucht, wobei das Erzeugen eines Differenzsignals umfasst:

sequentielles Speichern der Differenzsignale in einer SAD-Speichereinheit (305) ;

Berechnen eines ersten Grenzwertes unter Verwendung der sequentiell gespeicherten Differenzsignale;

Erzeugen von Mustern der Differenzsignale gemäß dem berechneten ersten Grenzwertes;

sequentielles Speichern der erzeugten Muster der Differenzsignale in einer ersten Muster-Speichereinheit (311); und

Vergleichen der gespeicherten Muster der Differenzsignale mit einem vorbestimmten Grundmuster der Differenzsignale;

wobei das 2:2-Pull-Down-Bild detektiert wird gemäß einem Ergebnis des Differenzsignal-Mustervergleichs.

16. Das Verfahren wie in Anspruch 15 beansprucht, wobei das Berechnen der ersten Grenzwertoperation umfasst:

Detektieren eines Minimalwertes des Differenzsignals mit Bezug auf einen bestimmten Abschnitt des in einer SAD-Speichereinheit (305) gespeicherten Differenzsignals; und
Detektieren eines Maximalwertes der Differenzsignale mit Bezug auf den bestimmten Abschnitt;

wobei der erste Grenzwert berechnet wird basierend auf den detektierten Minimal- und Maximalwerten.

17. Das Verfahren wie in Anspruch 16 beansprucht, wobei das Berechnen der ersten Grenzwertoperation den ersten Grenzwert durch die folgende Gleichung berechnet

$$T1 = a \times MIN + b \times MAX$$

wobei T1 den ersten Grenzwert bezeichnet, a und b bestimmte Werte sind, die a + b = 1 beibehalten, MIN einen Minimalwert von 5 kontinuierlichen Differenzsignalen bezeichnet und MAX einen Maximalwert der Differenzsignale in dem bestimmten Abschnitt bezeichnet.

18. Das Verfahren wie in Anspruch 17 beansprucht, wobei das Berechnen einer Absolut-Diffarenzsignaloperation umfasst:

sequentielles Speichern der Absolut-Differenzsignale in einer Absolut-Änderungsbetrag-Speichereinheit (355);
Berechnen eines zweiten Grenzwertes unter Verwendung der gespeicherten Absolut-Differenzsignale;
Erzeugen von Mustern der Absolut-Differenzsignale gemäß dem berechneten zweiten Grenzwert;
sequentielles Speichern der Muster der Absolut-Differenzsignale, die durch eine zweite Muster-Erzeugungseinheit (359) erzeugt wurden; und
Vergleichen der in einer zweiten Muster-speichereinheit (361) gespeicherten Muster der Absolut-Differenzsignale mit einem vorbestimmten Muster der Absolut-Differenzsignale;

wobei das 2:2-Pull-Down-Bild gemäß einem Ergebnis der Muster des Absolut-Differenzsignalvergleichs detektiert wird.

19. Das Verfahren wie in Anspruch 18 beansprucht, wobei das Berechnen einer zweiten Grenzwertoperation umfasst:

Detektieren eines Minimalwertes der Absolut-Differenzsignale mit Bezug auf einen bestimmten Abschnitt der in der Absolut-Änderungsbetrag-Speichereinheit (355) gespeicherten Absolut-Differenzsignale; und
Detektieren eines Maximalwertes der Absolut-Differenzsignale mit Bezug auf den bestimmten Abschnitt;

wobei der zweite Grenzwert berechnet wird basierend auf den detektierten Minimal- und Maximalwerten.

20. Das Verfahren wie In Anspruch 19 beansprucht, wobei der zweite Grenzwert-Berechnungsschritt den zweiten Grenzwert durch die folgende Gleichung berechnet

$$T2 = a' \times MIN' + b' \times MAX'$$

wobei T2 den zweiten Grenzwert bezeichnet, a' und b' bestimmte Werte sind, die a' + b' = 1 beibehalten, MIN' einen Minimalwert von 5 kontinuierlichen Absolut-Differenzsignalen bezeichnet und MAX' einen Maximalwert der Absolut-Differenzsignale des bestimmten Abschnittes bezeichnet.

**EP 1 501 297 B1**

**21.** Das Verfahren wie in Anspruch 20 beansprucht, wobei die Standbild-Bewertungsoperation bewertet, ob das Fernsehsignal das Standbild gemäß den Mustern der in der ersten Muster-Speichereinheit (311) gespeicherten Differenzsignale und den in der zweiten Muster-Speichereinheit (361) gespeicherten Mustern der Absdlut-Differenzsignale ist.

### Revendications

**1.** Procédé pour détecter une séquence en ajustement 2:2 dans un signal de télévision, consistant à :

générer un signal différentiel indiquant la différence entre la trame impaire et la trame paire des images successives ; **caractérisé par** le fait de :

générer un signal différentiel absolu indiquant l'amplitude de la différence entre des signaux différentiels consécutifs ; et
générer un signal d'indication d'une partie convertie en télécinéma, indiquant une séquence en ajustement 2:2, en fonction du signal différentiel absolu.

**2.** Procédé selon la revendication 1, consistant à :

stocker le signal différentiel absolu ;
calculer une valeur de seuil par rapport au signal différentiel absolu stocké ; et
générer le signal d'indication de la partie télécinéma, en fonction de la valeur de seuil.

**3.** Appareil pour détecter une séquence en ajustement 2:2 dans un signal de télévision, comprenant :

un moyen (303) pour générer un signal différentiel indiquant la différence entre la trame impaire et la trame paire des images successives ; **caractérisé par** :

un moyen (353) pour générer un signal différentiel absolu indiquant l'amplitude de la différence entre des signaux différentiels consécutifs ; et
une unité décisionnelle de séquence en ajustement 2:2 (390), configurée pour générer un signal d'indication de partie télécinéma, indiquant une séquence en ajustement 2:2 dans le signal de télévision, en fonction du signal différentiel absolu.

**4.** Appareil selon la revendication 3, comprenant :

un moyen (355) pour stocker le signal différentiel absolu ;
un moyen (357) pour calculer une valeur de seuil par rapport au signal différentiel absolu stocké ; et
un moyen (390) pour générer un signal d'indication de partie télécinéma, en fonction de la valeur de seuil.

**5.** Récepteur de télévision, comprenant:

un écran pour afficher une image ; et
un appareil selon l'une des revendications 3 ou 4.

**6.** Appareil selon l'une des revendications 3 ou 4, comprenant :

une unité de jugement d'image fixe (380) configurée pour juger, à partir du signal différentiel calculé et des signaux différentiels absolus, si le signal de télévision est une image fixe ; et dans lequel
l'unité décisionnelle de séquence en ajustement 2:2 (390) est configurée pour décider si le signal de télévision est une séquence en ajustement 2:2, en combinant la sortie du moyen (303) pour générer un signal différentiel, un moyen (353) pour générer un signal différentiel absolu et l'unité de jugement d'image fixe (380).

**7.** Appareil selon la revendication 6, dans lequel le moyen (303) pour générer le signal différentiel comprend:

une unité de calcul de DAA (303), configurée pour calculer les signaux différentiels entre les trames séquentielles du signal de télévision ;

**14**

une unité de stockage de DAA (305), configurée pour stocker successivement les signaux différentiels calculés ;

une première unité de calcul de valeur de seuil (307), configurée pour calculer une première valeur de seuil à l'aide des signaux différentiels stockés;

une première unité de génération de motifs (309), configurée pour générer les motifs des signaux différentiels en fonction de la première valeur de seuil calculée ;

une première unité de stockage de motifs (311), configurée pour stocker successivement les motifs des signaux différentiels générés par la première unité de génération de motifs (309) ; et

une première unité de comparaison de motifs (313) configurée pour comparer les motifs des signaux différentiels stockés dans la première unité de stockage de motifs (311) avec un motifde base prédéterminé des signaux différentiels ;

dans lequel le moyen (303) pour générer le signal différentiel détecte l'image en ajustement 2:2, conformément à un résultat de comparaison de la première unité de comparaison de motifs (313).

**8.** Appareil selon la revendication 7, dans lequel la première unité de calcul de valeur de seuil (307) comprend :

une première unité de détection de valeur minimale (307a), configurée pour détecter une valeur minimale des signaux différentiels par rapport à une section spécifiée de la différence stockée dans l'unité de stockage de DAA (305) ; et

une première unité de détection de valeur maximale (307b), configurée pour détecter une valeur maximale des signaux différentiels par rapport à la section spécifiée ;

dans lequel la première unité de calcul de valeur de seuil (307) calcule la première valeur de seuil à partir des valeurs minimale et maximale détectées.

**9.** Appareil selon la revendication 8, dans lequel la première unité de calcul de valeur de seuil (307) calcule la première valeur de seuil à l'aide de l'équation suivante

$$T1 = a \times MIN + b \times MAX$$

dans laquelle T1 désigne la première valeur de seuil, a et b ont certaines valeurs telle que a + b = 1, MIN désigne la valeur minimale de 5 signaux différentiels continus, et MAX désigne la valeur maximale des signaux différentiels dans la section spécifiée.

**10.** Appareil selon la revendication 9, dans lequel le moyen (353) pour générer le signal différentiel absolu comprend :

une unité de calcul de signal différentiel absolu (353), configurée pour calculer les différences absolues entre les signaux différentiels calculés ;

une unité de stockage de quantités de variation absolue (355), configurée pour stocker successivement les signaux différentiels absolus ;

une deuxième unité de calcul de valeur de seuil (357), configurée pour calculer la deuxième valeur de seuil à l'aide des signaux différentiels absolus ;

une deuxième unité de génération de motifs (359), configurée pour générer les motifs des signaux différentiels absolus en fonction de la deuxième valeur de seuil calculée ;

une deuxième unité de stockage de motifs (361), configurée pour stocker successivement les motifs des signaux différentiels absolus générés par la deuxième unité de génération de motifs (359) ; et

une deuxième unité de comparaison de motifs (363), configurée pour comparer le motif des signaux différentiels absolus stockés dans la deuxième unité de stockage de motifs (361) avec un motif de base prédéterminé des signaux différentiels absolus ;

dans lequel le moyen (353) pour générer le signal différentiel absolu détecte l'image en ajustement 2:2 conformément au résultat d'une comparaison de la deuxième unité de comparaison de motifs (363). 1;

**11.** Appareil selon la revendication 10, dans lequel la deuxième unité de calcul de la valeur de seuil (357) comprend : 1

une deuxième unité de détection de valeur minimale (357a), configurée pour détecter une valeur minimale des signaux différentiels absolus par rapport, à une section spécifiée des signaux différentiels absolus stockés dans l'unité de stockage de quantités de variation absolue (355) ; et

une deuxième unité de détection de valeur maximale (357b), configurée pour détecter une valeur maximale des signaux différentiels absolus par rapport à la section spécifiée ;

dans lequel la deuxième unité de calcul de valeur de seuil (357) calcule la deuxième valeur de seuil à partir des valeurs minimale et maximale détectées.

**12.** Appareil selon la revendication 11, dans lequel la deuxième unité de calcul de valeur de seuil (357) calcule la deuxième valeur de seuil à l'aide de l'équation suivante

$$T2 = a' \times MIN' + b' \times MAX'$$

dans laquelle T2 désigne la deuxième valeur de seuil, a' et b' sont certaines valeurs telles que a' + b' = 1, MIN' désigne une valeur minimale de 5 signaux différentiels absolus continus, et MAX' désigne une valeur maximale des signaux différentiels absolus de la section spécifiée.

**13.** Appareil selon la revendication 12, dans lequel l'unité de jugement d'image fixe (380) juge si le signal de l'image est l'image fixe, en fonction des motifs des signaux différentiels stockés dans la première unité de stockage de motifs (311) et des motifs des signaux différentiels absolus stockés dans la deuxième unité de stockage de motifs (381).

**14.** Procédé selon la revendication 1, consistant à :

détecter l'image en ajustement 2:2 à partir du signal différentiel généré ;
détecter l'image en ajustement 2:2 à partir du signal différentiel absolu ;
juger si le signal de télévision est une image fixe à partir du signal différentiel généré et du signal différentiel absolu ; et
décider si le signal de télévision est la séquence en ajustement 2:2, en combinant les résultats de la détection de l'image en ajustement 2:2 à l'aide du moyen (303) pour générer un signal différentiel, et à l'aide du moyen pour générer un signal différentiel absolu et un résultat pour juger si le signal de télévision est l'image fixe.

**15.** Procédé selon la revendication 14, dans lequel le fait de générer un signal différentiel consiste à :

stocker successivement les signaux différentiels dans une unité de stockage de DAA (305) ;
calculer la première valeur de seuil à l'aide des signaux différentiels stockés successivement ;
générer des motifs des signaux différentiels en fonction de la première valeur de seuil calculée ;
stocker successivement les motifs générés des signaux différentiels dans une première unité de stockage de motifs (311) ; et
comparer les motifs stockés des signaux différentiels avec un motif de base prédéterminé des signaux différentiels ;

dans lequel l'image en ajustement 2:2 est détectée conformément au résultat de la comparaison des motifs des signaux différentiels.

**16.** Procédé selon la revendication 15, dans lequel l'opération de calcul de la première valeur de seuil consiste à :

détecter une valeur minimale du signal différentiel par rapport à la section spécifiée des signaux différentiels stockés dans l'unité de stockage de DAA (305) ; et
détecter une valeur maximale des signaux différentiels par rapport à la section spécifiée ;

dans lequel la première valeur de seuil est calculée à partir des valeurs minimale et maximale détectées. 1

**17.** Procédé selon la revendication 16, dans lequel l'opération de calcul de la première valeur de seuil calcule la première valeur de seuil à l'aide de l'équation suivante

$$T1 = a \times MIN + b \times MAX$$

dans laquelle T1 désigne la première valeur de seuil, a et b sont certaines valeurs garantissant que a + b = 1, MIN désigne une valeur minimale de 5 signaux différentiels continus, et MAX désigne une valeur maximale des signaux différentiels dans la section spécifiée.

18. Procédé selon la revendication 17, dans lequel l'opération de calcul du signal différentiel absolu consiste à :

stocker successivement les signaux différentiels absolus dans une unité de stockage de quantités de variation absolue (355) ;
calculer une deuxième valeur de seuil à l'aide des signaux différentiels absolus stockés ;
générer des motifs de signaux différentiels absolus en fonction de la deuxième valeur de seuil calculée ;
stocker successivement les motifs des signaux différentiels absolus générés par une deuxième unité de génération de motifs (359) ; et
comparer les motifs des signaux différentiels absolus stockés dans une deuxième unité de stockage de motifs (361) avec un motif de base prédéterminé des signaux différentiels absolus ;

dans lequel l'image en ajustement 2:2 est détectée conformément au résultat des motifs de la comparaison des signaux différentiels absolus.

19. Procédé selon la revendication 18, dans lequel l'opération de calcul de la deuxième valeur de seuil consiste à :

détecter une valeur minimale des signaux différentiels absolus par rapport à une section spécifiée des signaux différentiels absolus stockés dans l'unité de stockage de quantités de variation absolue (355) ; et
détecter une valeur maximale des signaux différentiels absolus par rapport à la section spécifiée ;

dans lequel la deuxième valeur de seuil est calculée à partir des valeurs minimale et maximale détectées.

20. Procédé selon la revendication 19, dans lequel l'étape de calcul de la deuxième valeur de seuil calcule la deuxième valeur de seuil à l'aide de l'équation suivante

$$T2 = a' \times MIN' + b' \times MAX'$$

dans laquelle T2 désigne la deuxième valeur de seuil, a' et b' sont certaines valeurs telles que a' + b' = 1, MIN' désigne une valeur minimale de 5 signaux différentiels absolus continus, et MAX' désigne une valeur maximale des signaux différentiels absolus de la section spécifiée.

21. Procédé selon la revendication 20, dans lequel l'opération de jugement d'image fixe juge si le signal de télévision est l'image fixe en fonction des motifs des signaux différentiels stockés dans la première unité de stockage de motifs (311) et des motifs des signaux différentiels absolus stockés dans la deuxième unité de stockage de motifs (361).

# FIG. 1

# FIG. 2

FIELD n

FIELD n-1

**300**

## 2:2 MAIN DETECTION UNIT

**303** SAD CALCULATION UNIT

**305** SAD STORAGE UNIT

**307** FIRST THRESHOLD VALUE CALCULATION UNIT

**311** FIRST PATTERN STORAGE UNIT

**309** FIRST PATTERN GENERATION UNIT

MUX 0 1

**313** FIRST PATTERN COMPARISON UNIT

**380** STILL IMAGE JUDGMENT UNIT

MUX

## 2:2 SUB-DETECTION UNIT

**353** ABSOLUTE CHANGE AMOUNT CALCULATION UNIT

**355** ABSOLUTE CHANGE AMOUNT STORAGE UNIT

**357** SECOND THRESHOLD VALUE CALCULATION UNIT

**361** SECOND PATTERN STORAGE UNIT

**359** SECOND PATTERN GENERATION UNIT

MUX 0 1

**363** SECOND PATTERN COMPARISON UNIT

**350**

**390**

SEL    PREVIOUS FLAG

MUX

2:2 ON/OFF

2:2 PULL-DOWN SEQUENCE

EP 1 501 297 B1

# FIG. 3

307

SAD BUFFER FIFO

SAD

307a

307b

MIN
TEST

MAX
TEST

MIN
(1ST,2ND...)

MAX
(1ST,2ND...)

T1 = A * MIN + B * MAX

T

# FIG. 4

357

|ΔSAD| BUFFER FIFO

|ΔSAD|

357a

357b

MIN
TEST

MAX
TEST

MIN
(1ST,2ND...)

MAX
(1ST,2ND...)

T2 = A' * MIN' + B' * MAX'

T

# FIG. 5

| SAD | PATTERN : | 0 | 1 | 2 | · · · | n-2 | n-1 | n |
|---|---|---|---|---|---|---|---|---|

| |ΔSAD| | PATTERN : | 0 | 1 | 2 | · · · | n-2 | n-1 |
|---|---|---|---|---|---|---|---|

# FIG. 6

```
               ( START )
                   │
S601──┤ CALCULATE SAD BETWEEN FIELD n AND FIELD n-1 │
                   │
S603──┤      DETECT 2:2 PULL-DOWN IMAGE
              BASED ON CALCULATED SAD              │
                   │
S605──┤    CALCULATE ABSOLUTE CHANGE AMOUNT
              BETWEEN CALCULATED SADS              │
                   │
S607──┤    DETECT 2:2 PULL-DOWN IMAGE BASED ON
           CALCULATED ABSOLUTE CHANGE AMOUNT       │
                   │
S609──┤ JUDGE WHETHER THE IMAGE SIGNAL IS STILL IMAGE
         BASED ON SAD AND ABSOLUTE CHANGE AMOUNT   │
                   │
S611──┤ DETERMINE 2:2 PULL-DOWN IMAGE OF IMAGE SIGNAL
         ACCORDING TO RESULT OF 2:2 PULL-DOWN IMAGE
          DETECTION BASED ON SAD, RESULT OF 2:2
         PULL-DOWN IMAGE DETECTION BASED ON ABSOLUTE
               CHANGE AMOUNT, AND RESULT OF
                  STILL IMAGE JUDGMENT             │
                   │
               ( END )
```

# FIG. 7

START

S701 — SEQUENTIALLY STORE CALCULATED SADS IN SAD STORAGE UNIT

S703 — DETECT MINIMUM VALUE OF SAD IN SPECIFIED SECTION OF STORED SAD

S705 — DETECT MAXIMUM VALUE OF SAD IN SPECIFIED SECTION OF STORED SAD

S707 — CALCULATE FIRST THRESHOLD VALUE BASED ON DETECTED MINIMUM VALUE AND MAXIMUM VALUE

S709 — GENERATE SAD PATTERNS ACCORDING TO CALCULATED FIRST THRESHOLD VALUE

S711 — SEQUENTIALLY STORE GENERATED SAD PATTERNS IN FIRST PATTERN STORAGE UNIT

S713 — COMPARE STORED SAD PATTERN WITH PREDETERMINED BASIC SAD PATTERN

S715 — DETECT 2:2 PULL-DOWN IMAGE ACCORDING TO RESULT OF COMPARISON

# FIG. 8

START

S801 — SEQUENTIALLY STORE CALCULATED ABSOLUTE CHANGE AMOUNTS IN ABSOLUTE CHANGE AMOUNT STORAGE UNIT

S803 — DETECT MINIMUM VALUE OF ABSOLUTE CHANGE AMOUNTS IN SPECIFIED SECTION OF STORED ABSOLUTE CHANGE AMOUNTS

S805 — DETECT MAXIMUM VALUE OF ABSOLUTE CHANGE AMOUNTS IN SPECIFIED SECTION OF STORED ABSOLUTE CHANGE AMOUNTS

S807 — CALCULATE SECOND THRESHOLD VALUE BASED ON DETECTED MINIMUM VALUE AND MAXIMUM VALUE

S809 — GENERATE ABSOLUTE CHANG AMOUNT PATTERNS ACCORDING TO CALCULATED SECOND THRESHOLD VALUE

S811 — SEQUENTIALLY STORE GENERATED ABSOLUTE CHANGE AMOUNT PATTERNS IN SECOND PATTERN STORAGE UNIT

S813 — COMPARE STORED ABSOLUTE CHANGE AMOUNT PATTERN WITH PREDETERMINED BASIC ABSOLUTE CHANGE AMOUNT PATTERN

S815 — DETECT 2:2 PULL-DOWN IMAGE ACCORDING TO RESULT OF COMPARISON

FIG. 9

ORIGINAL
IMAGE

SAD :

|ΔSAD| :

FIG. 10

SAD PATTERN :

|ΔSAD| PATTERN :